# EUROPÄISCHE PATENTSCHRIFT

(11) **EP 2 325 031 B1**
(45) Veröffentlichungstag und Bekanntmachung des Hinweises auf die Patenterteilung: **13.06.2012**
(21) Anmeldenummer: 09176647.7
(22) Anmeldetag: 20.11.2009
(51) Int. Cl.: B60G 7/02

(54) **Fahrgestell eines Nutzfahrzeugs mit einem Längsträger und einem Federbock**
Chassis of an industrial goods vehicle with a side member and a spring bracket
Châssis d'un véhicule utilitaire doté d'un support longitudinal et d'un support de ressort

(43) Veröffentlichungstag der Anmeldung: 25.05.2011
(73) Patentinhaber: Schmitz Cargobull AG, 48341 Altenberge (DE)
(72) Erfinder: Rathmann, Norbert, 48356 Nordwalde (DE); Kötter, Jürgen, 49545 Tecklenburg (DE); Scholz, Volker, 48341 Altenberge (DE)
(74) Vertreter: Cohausz & Florack

(56) Entgegenhaltungen:
- EP-A1- 2 006 129
- DE-U1- 20 011 858
- JP-A- 11 099 958
- US-A1- 2001 052 685
- US-A1- 2004 021 290

## Beschreibung

Die Erfindung betrifft ein Fahrgestell eines Nutzfahrzeugs, insbesondere eines Lastkraftwagens, eines Anhängers und/oder eines Aufliegers, mit wenigstens einem Längsträger und wenigstens einem Federbock, wobei der Federbock einen seitlich am Längsträger befestigten Montageabschnitt sowie einen unterhalb des Montageabschnitts angeordneten Aufnahmeabschnitt zur Aufnahme wenigstens eines Federaggregats aufweist und wobei der Aufnahmeabschnitt einen separaten äußeren Schenkel und einen separaten inneren Schenkel umfasst, die zwischen einander im Aufnahmeabschnitt einen Aufnahmeraum zur Aufnahme des Federaggregats ausbilden, und unterhalb des Längsträgers miteinander verbunden sind.

Unter Nutzfahrzeugen werden vorliegend insbesondere Fahrzeuge für den Straßenverkehr verstanden, die vornehmlich für den Transport von stückigen oder stückig verpackten Gütern eingesetzt werden. Dabei kann es sich insbesondere um einen Lastkraftwagen, einen Anhänger und/oder einen Auflieger handeln.

Ein Fahrgestell der genannten Art ist bereits aus der EP 2 006 129 A1 bekannt, von der die Erfindung ausgeht. Bei diesem ist der äußere Schenkel plattenförmig und der innere Schenkel als Gussteil ausgebildet. Der äußere Schenkel weist infolge seiner plattenförmigen Gestalt eine höhere Festigkeit in Querrichtung des Fahrgestells auf. Der innere Schenkel kann dagegen ohne weiteres in einer komplexen Geometrie hergestellt werden. Diese komplexe Geometrie ist erforderlich, um die Funktionalität und gleichzeitig die Stabilität oder Festigkeit des inneren Schenkels sicherzustellen. Dabei wirkt sich die Festigkeit des inneren Schenkels auf die Festigkeit des gesamten, durch den inneren und den äußeren Schenkel gebildeten, Federbocks aus.

Es besteht jedoch ein weiterer Bedarf einer Kostenreduzierung des Fahrgestells.

Der Erfindung liegt daher die Aufgabe zugrunde, das eingangs genannte und zuvor näher beschriebene Fahrgestell derart auszugestalten und weiterzubilden, dass es kostengünstiger hergestellt werden kann, ohne nennenswerte Einbußen in der Funktionalität und der Festigkeit in Bezug auf den Federbock in Kauf nehmen zu müssen.

Diese Aufgabe ist bei einem Fahrgestell mit den Merkmalen des Oberbegriffs von Anspruch 1 dadurch gelöst, dass der innere Schenkel und der äußere Schenkel als Schalenbauteil ausgebildet sind.

Die Erfindung hat folglich erkannt, dass es entbehrlich ist, den inneren Schenkel des Federbocks als teures und arbeitsintensives Gussteil auszugestalten. Dies wird erreicht, indem der innere und der äußere Schenkel jeweils als Schalenbauteil ausgebildet werden. Unter einem Schalenbauteil wird insbesondere ein dünnwandiges, Bauteil verstanden. Das Schalenbauteil ist vorzugsweise kein Gussteil. Als Schalenbauteil kommt aber sowohl ein Blechteil, insbesondere eines aus Stahlblech, als auch ein geschmiedetes Bauteil in Frage.

Die sich dadurch ergebenden Kostenvorteile beruhen etwa darauf, dass eine Nachbearbeitung bestimmter Oberflächen entfallen kann, die bei Gussteilen erforderlich ist. Diese Oberflächen sind insbesondere Anlageflächen mit anderen Bauteilen des Fahrgestells, die hohen Qualitätsanforderungen genügen müssen. Zudem ist die Herstellung von Gussteilen zeit- und arbeitsaufwändiger als die Herstellung eines Schalenbauteils. Nicht zuletzt ist es möglich, bei Schalenbauteilen, insbesondere bei Blechteilen, Materialmengen und damit Gewicht sowie Materialkosten einzusparen.

Das Fahrgestell kann mehr als nur einen Längsträger aufweisen. Vorzugsweise umfasst das Fahrgestell einen Rahmen, der aus jeweils zwei gegenüberliegenden Längsträgern und Querträgern zusammengesetzt ist. Beispielsweise an einem solchen Rahmen können mehrere Federböcke vorgesehen sein. Es bietet sich an, dass für jede Achse zwei Federböcke an unterschiedlichen Längsträgern vorgesehen sind. Bei Verwendung mehrerer Achsen sind dann vorzugsweise an einem Längsträger mehrere Federböcke vorgesehen, deren Anzahl der Anzahl der Achsen entspricht.

Im Übrigen sind die inneren und äußeren Schenkel des Federbocks aus Kostengründen vorzugsweise einteilig ausgebildet. Es ist jedoch bedarfsweise auch möglich, dass der innere und/oder der äußere Schenkel mehrteilig ausgebildet sind.

Bei einer ersten bevorzugten Ausgestaltung des Fahrgestells ist vorgesehen, dass der innere Schenkel und/oder der äußere Schenkel als gepresstes Blechformteil ausgebildet sind. Als Folge dieser Ausgestaltung des inneren und des äußeren Schenkels kann das Fahrgestell, insbesondere der Federbock, kostengünstiger hergestellt werden.

Dabei wird unter einem gepressten Blechformteil vorzugsweise jedes aus einem Blechmaterial durch Umformen hergestelltes Formteil verstanden, dessen räumliche Gestalt durch das Umformen nennenswert verändert worden ist. Insbesondere kommen alle Arten des Umformens in Frage bei denen das Blechteil unter Druck umgeformt wird. Aus Kostengesichtspunkten ist es besonders bevorzugt, wenn das Blechteil in einer Presse unter Druck zu einem Formteil umgeformt worden ist. Das Blechteil kann dabei tiefgezogen werden. Die Presse weist hierzu eine Matrize auf, welche korrespondierend zu dem späteren Formteil ausgebildet ist. Mit dieser Matrize wirkt eine korrespondierend geformte Patrize unter hohem Druck zusammen, welche das Blech in die Matrize presst und dabei umformt. Es kommen aber auch andere Umformverfahren in Frage.

Das Blech wird zu einem Formteil umgeformt, das nicht mehr plattenförmig ausgebildet ist, sondern eine ausgeprägte dreidimensionale Profilierung aufweist. Weiter bevorzugt ist es, wenn durch das Umformen nicht nur eine geeignete räumliche Struktur des äußeren und/oder des inneren Schenkels erhalten wird. Zusätzlich kann nämlich in bevorzugter Weise die Festigkeit des Federbocks als solches im Wesentlichen durch diese dreidimensionalen Profilierungen des inneren Schenkels und des äußeren Schenkels sichergestellt werden. Die benötigte Festigkeit des Federbocks bzw. des äußeren und/oder des inneren Schenkels kann letztlich durch das Umformen erzielt werden.

Bei einer anderen bevorzugten Ausgestaltung sind der innere Schenkel und der äußere Schenkel oberhalb des Aufnahmeraums zur Aufnahme des Federaggregats miteinander verbunden. Auf diese Weise kann das Federaggregat bedarfsweise von unten in den dafür vorgesehenen Aufnahmeraum des Federbocks eingeführt werden. Dadurch lassen sich die Montagezeiten und die Demontagezeiten im Falle einer Reparatur verkürzen. Es kann also bevorzugt sein, wenn zwischen dem Montageabschnitt und dem Aufnahmeabschnitt des Federbocks ein Verbindungsabschnitt vorgesehen ist, in dem der innere Schenkel mit dem äußeren Schenkel verbunden ist.

Bei einer weiter bevorzugten Ausgestaltung des Fahrgestells sind der innere Schenkel und der äußere Schenkel durch eine Schraubverbindung miteinander verbunden. Diese erlaubt kurze Fertigungstakte bei der Herstellung mehrerer Fahrgestelle bzw. Federböcke, was letztlich zu einer weiteren Kostenreduktion führt. Alternativ oder zusätzlich können der innere Schenkel und der äußere Schenkel auch durch eine Bolzverbindung miteinander verbunden werden. Dies ist auch kostengünstig aber hinsichtlich einer etwaigen Reparatur und/oder Demontage gegenüber der Schraubverbindung eher nachteilig. Gleiches gilt für eine Nietverbindung, die ebenfalls alternativ oder zusätzlich vorgesehen sein kann. Dabei kann die Nietverbindung leicht von der Außenseite des Fahrgestells her montiert werden.

Der innere Schenkel kann unabhängig von seiner Verbindung mit dem äußeren Schenkel einen nach innen abkragenden Abschnitt aufweisen. Durch diesen abkragenden Abschnitt kann die Breite des Aufnahmeraums für das Federaggregat zwischen dem inneren Schenkel und dem äußeren Schenkel leicht verbreitert werden. Es kann alternativ oder zusätzlich aber auch die Lage des Aufnahmeraums in einer Richtung quer zum Längsträger variiert werden, so dass infolge des jeweiligen abkragenden Abschnitts des inneren Schenkels Federaggregate mit unterschiedlichen Anschlussmaßen verbaut werden können.

Alternativ oder zusätzlich kann der äußere Schenkel einen nach außen abkragenden Abschnitt aufweisen. Dabei werden ebenfalls die zuvor in Bezug auf den inneren Schenkel genannten Vorteile erzielt. Insbesondere zur Anpassung ab bestimmte Federaggregate und bestimmte Anschlussmaße derselben kann bedarfsweise der innere Schenkel einen weiter abkragenden Abschnitt umfassen als der äußere Schenkel oder umgekehrt.

Sollte dies aufgrund spezieller Anschlussmaße besonderer Federaggregate erforderlich sein, kann der innere Schenkel alternativ einen nach außen abkragenden Abschnitt und/oder der äußere Schenkel einen nach innen abkragenden Abschnitt aufweisen. Dies ist jedoch aus Festigkeitsgründen grundsätzlich weniger bevorzugt.

Weiter bevorzugt ist es, wenn der Aufnahmeraum zur Aufnahme des Federaggregats unterhalb des wenigstens einen nach innen und/oder nach außen abkragenden Abschnitts vorgesehen ist. Auf diese Weise kann ein unterer Abschnitt des entsprechenden Schenkels bereitgestellt werden, der nicht abkragend ausgebildet sein muss und doch im gewünschten Abstand zum jeweils anderen Schenkel angeordnet ist. Es wird letztlich ein Aufnahmeraum gewünschter Breite und gewünschter Lage relativ zum Längsträger geschaffen, um das jeweilige Federaggregat aufzunehmen. Zudem kann der untere Abschnitt des entsprechenden Schenkels vorzugsweise vertikal ausgebildet sein, um eine einfache Montage des Federaggregats in diesem Abschnitt sicherstellen zu können. Insbesondere kann aus konstruktiven und fertigungstechnischen Gründen vorgesehen sein, dass der wenigstens eine abkragende Abschnitt des wenigstens einen Schenkels zwischen dem Aufnahmeabschnitt und dem Verbindungsabschnitt der beiden Schenkel vorgesehen ist.

Um die Breite und die Lage des Aufnahmeraums relativ, also quer, zum Längsträger gezielt beeinflussen zu können, kann alternativ oder zusätzlich an der Verbindung des inneren und des äußeren Schenkels zwischen dem inneren und dem äußeren Schenkel wenigstens ein Distanzelement vorgesehen sein. Dabei bietet es sich an, wenn das Distanzelement als Scheibe und/oder Platte ausgebildet ist. Dies stellt eine platzsparende Lösung dar und erlaubt einen modularen Aufbau, bei dem bei unterschiedlichen Federböcken eine unterschiedliche Anzahl gleichartiger Distanzelemente verwendet werden kann.

Hinsichtlich einer einfachen Montage des Federbocks ist es begünstigt, wenn der Montageabschnitt vom äußeren Schenkel gebildet wird. Der Montageabschnitt kann dann in einfacher Weise von der Außenseite des Längsträgers montiert werden, ohne dass dies zu konstruktiven Problemen bei der Ausgestaltung des Federbocks bzw. des inneren und des äußeren Schenkels führt. Das obere Ende des inneren Schenkels ist dann vorzugsweise unterhalb des Längsträgers angeordnet. Eine komplizierte Anbindung des inneren Schenkels an den Montageabschnitt kann somit entfallen.

Wenn der innere Schenkel und/oder der äußere Schenkel wenigstens einen gekröpften Abschnitt aufweist, kann dies zur Stabilisierung des Federbocks bzw. zur Erhöhung von dessen Festigkeit dienen. Dabei bietet es sich an, wenn wenigstens ein Randbereich des inneren und/oder des äußeren Schenkels nach außen gekröpft ist, so dass der wenigstens eine gekröpfte Abschnitt nach außen, und zwar quer zum Längsträger, absteht. Dies ist hinsichtlich der Festigkeit bevorzugt und stellt sicher, dass der wenigstens eine gekröpfte Abschnitt bei der Aufnahme des Federaggregats bzw. bei dessen Demontage nicht stört.

Aus Gründen der Festigkeit des Federbocks kann der wenigstens eine gekröpfte Abschnitt des inneren Schenkels und/oder des äußeren Schenkels alternativ oder zusätzlich im Bereich des Aufnahmeabschnitts vorgehen sein. Eine weitere Verbesserung der Festigkeitswerte kann bedarfsweise erreicht werden, wenn der wenigstens eine gekröpfte Abschnitt des inneren Schenkels und/oder des äußeren Schenkels im abkragenden Abschnitt des entsprechenden Schenkels und/oder im Verbindungsabschnitt zwischen dem inneren Schenkel und dem äußeren Schenkel vorgesehen ist. Besonders bevorzugt ist es in diesem Zusammenhang, wenn sich der wenigstens eine gekröpfte Abschnitt von wenigstens einem dieser Abschnitte bis in den benachbarten Abschnitt hinein erstreckt. Dabei kann sich der wenigstens eine gekröpfte Abschnitt des inneren Schenkels und/oder des äußeren Schenkels zur weiteren Erhöhung der Festigkeit des Aufnahmeabschnitts über den abkragenden Abschnitt bis in den Verbindungsabschnitt des inneren und/oder des äußeren Schenkels hinein erstrecken.

Zur Ausgestaltung des Fahrgestells als solches kann eine Querstrebe an dem inneren Schenkel und/oder dem äußeren Schenkel montiert sein. Diese Querstrebe ist dann aus konstruktiver Sicht vorzugsweise mit ihrer gegenüberliegenden Seite an einem weiteren Federbock montiert, und zwar auf die gleiche oder eine andere Weise.

Besonders bevorzugt ist es in diesem Zusammenhang aus konstruktiven und Festigkeitsgesichtspunkten, wenn die Querstrebe an dem wenigstens einen gekröpften Abschnitt des inneren Schenkels und/oder des äußeren Schenkels montiert ist. Vorzugsweise ist die Querstrebe an beiden Schenkeln montiert, um die Festigkeit zu erhöhen. Dies geschieht weiter vorzugsweise an der dem Federaggregat abgewandten Seite in Längsrichtung des Längsträgers, wo dementsprechend vorzugsweise die gekröpften Abschnitte des inneren und des äußeren Schenkels angeordnet sind. Dadurch kommt es nicht zu einer räumlichen Behinderung einzelner Bauteile des Fahrgestells.

In bevorzugter Ausgestaltung ist im Aufnahmeraum des wenigstens einen Federbocks des Fahrgestells ein Federlenker aufgenommen. Dieser kann dann aufgrund der Anbindung an den Längsträger in stabiler Weise gelagert werden.

Alternativ oder zusätzlich kann zwischen dem inneren Schenkel und dem äußeren Schenkel eine Aufnahme zum Aufnehmen eines weiteren Federaggregats oder eines weiteren Bauteils des Federaggregats vorgesehen sein. Auf diese weise kann die Funktionalität des Federbocks erhöht werden, was durch Ersatz weiterer Bauteile zu einer weiteren Kosteneinsparung führen kann.

In diesem Zusammenhang und aufgrund üblicher Ausgestaltungen von Federaggregaten bietet es sich an, wenn in der Aufnahme ein Stoßdämpfer aufgenommen ist.

Der Montageabschnitt des Federbocks weist mehrere parallel zueinander verlaufende Reihen von Bohrungen zum Befestigen des Federbocks am Längsträger auf. Die Bohrungen jeder einzelnen Reihe weisen dabei vorzugsweise gleiche Abstände untereinander auf. Dadurch kann gewährleistet werden, dass der Federbock an ein und demselben Längsträger in unterschiedlichen Höhen montierbar ist. Auf diese Weise können mit gleichen Bauteilen an unterschiedliche Federaggregate angepasste Montagehöhen in Art eines modularen Aufbaus erzielt werden.

Die Erfindung wird nachfolgend anhand einer lediglich ein Ausführungsbeispiel darstellenden Zeichnung näher erläutert. In der Zeichnung zeigt
- Fig. 1: ein Detail eines erfindungsgemäßen Fahrgestells in einer vertikalen Schnittansicht quer zum Längsträger,
- Fig. 2: das Detail des Fahrgestells aus Fig. 1 in einer vertikalen Schnittansicht quer zum Längsträger gesehen aus der gegenüber der Fig. 1 entgegengesetzten Richtung und
- Fig. 3: der Federbock aus Fig. 1 in einer perspektivischen Ansicht ohne zusätzliche Bauteile.

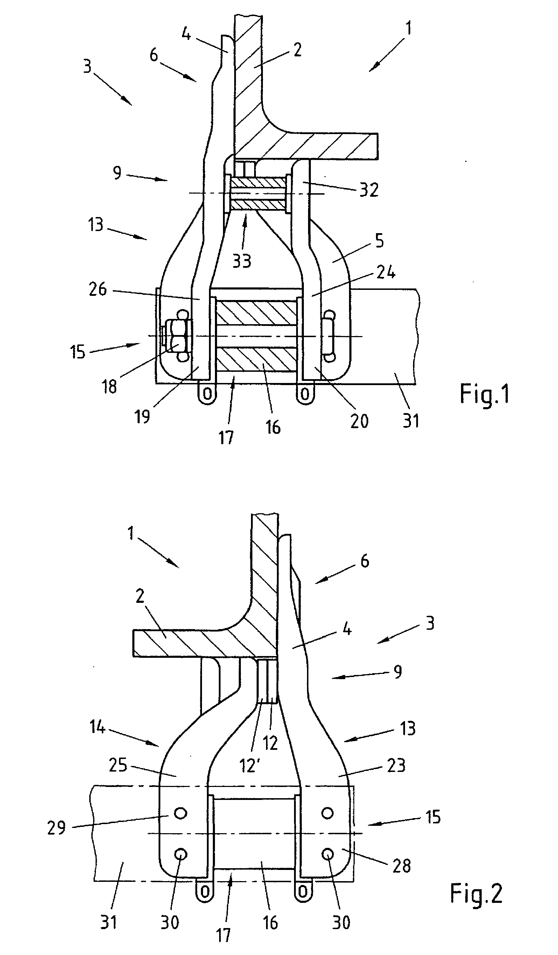

In den Fig. 1 bis 2 sind Details eines Fahrgestells 1 dargestellt. Das Fahrgestell 1 weist einen Längsträger 2 auf, der quer zu seiner Längserstreckung geschnitten dargestellt ist. Der Längsträger 2 weist beim dargestellten und insoweit bevorzugten Ausführungsbeispiel einen Z-förmigen Querschnitt auf. Es würde sich jedoch auch ein nach innen offener, U-förmiger Querschnitt anbieten.

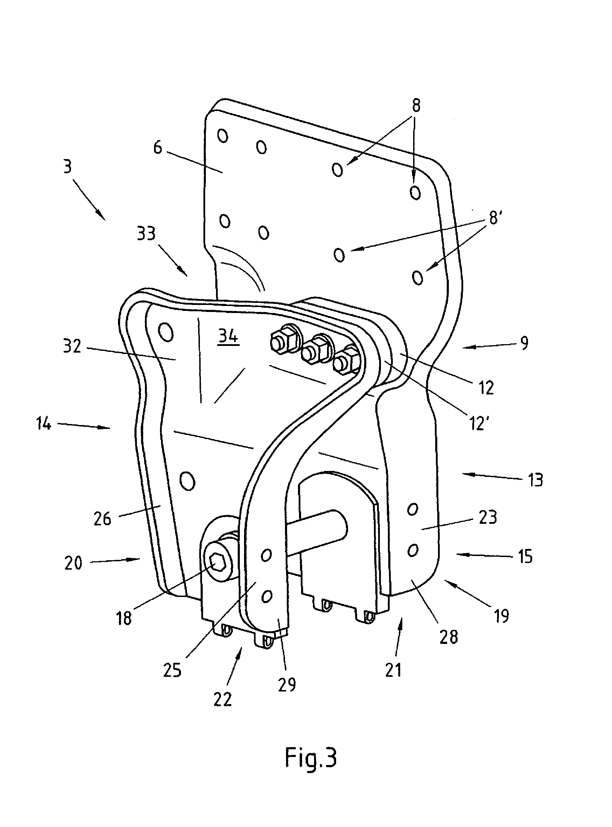

An dem Längsträger 2 ist ein Federbock 3 befestigt, der im Wesentlichen aus einem äußeren Schenkel 4 und einem inneren Schenkel 5 gebildet wird, wobei die Begriffe "außen" und "innen" in Relation zum Fahrgestell 1 gewählt sind. Der besseren Anschaulichkeit halber ist der Federbock 3 in Fig. 3 separat dargestellt. Der äußere Schenkel 4 ist mithin der Außenseite des Fahrgestells und damit des Nutzfahrzeugs zugewandt.

Beim dargestellten und insoweit bevorzugten Ausführungsbeispiel weist der äußere Schenkel 4 einen Montageabschnitt 6 auf, der seitlich mit dem Längsträger 2 überlappt. Im Montageabschnitt 6 ist der äußere Schenkel 4 und damit der Federbock 3 als solcher mit dem Längsträger 2 verbunden, vorliegend verschraubt. Die Schrauben dieser Verbindung sind beim dargestellten und insoweit bevorzugten Ausführungsbeispiel in einer horizontalen Reihe angeordnet. Parallel zu dieser Reihe von Schrauben, die durch entsprechende Bohrungen 8 des äußeren Schenkels geführt sind, ist eine weitere Reihe von gleichartigen Bohrungen 8' vorgesehen, über die der äußere Schenkel 4 in alternativer Ausgestaltung mit dem Längsträger 2 verschraubt sein könnte, um eine andere Montagehöhe des Federbocks 3 bereitzustellen.

Unter dem Montageabschnitt 6 des Federbocks 3 ist bei dem dargestellten und insoweit bevorzugten Ausführungsbeispiel ein Verbindungsabschnitt 9 vorgesehen, in dem der innere Schenkel 5 des Federbocks 3 am äußeren Schenkel 4 des Federbocks 3 befestigt ist. Der Verbindungsabschnitt 9 befindet sich unterhalb des Längsträgers 2. Dies bedeutet beim dargestellten Ausführungsbeispiel nicht nur, dass der Verbindungsabschnitt 9 auf einer geringeren Höhe angeordnet ist als der Längsträgers 2, sondern dass der Verbindungsabschnitt 9 den Längsträger 2 wenigstens teilweise untergreift.

Zwischen den beiden Schenkeln 4,5 sind zwei plattenförmige Distanzelemente 12,12' vorgesehen, welche den innern und den äußeren Schenkel 4,5 auf einem vorbestimmten Abstand zueinander halten. Die beiden Schenkel 4,5 sind bei dem dargestellten und insoweit bevorzugten Ausführungsbeispiel miteinander verschraubt.

Dem Verbindungsabschnitt 9 des Federbocks 3 schließen sich nach unten hin ein abkragender Abschnitt 13 des äußeren Schenkels 4 und ein abkragender Abschnitt 14 des inneren Schenkels 5 an. Der äußere Schenkel 4 ist in dem abkragenden Abschnitt 13 nach außen gewölbt bzw. gebogen, während der innere Schenkel 5 im abkragenden Abschnitt 14 nach innen gewölbt bzw. gebogen ist. Aufgrund der abkragenden Abschnitte 13,14 der Schenkel 4,5 entfernen sich beide Schenkel 4,5 im Vergleich zum Verbindungsabschnitt 9 voneinander. Bei dem dargestellten und insoweit bevorzugten Ausführungsbeispiel ist der abkragende Abschnitt 13 des äußeren Schenkels 4 deutlich weniger ausgeprägt als der abkragende Abschnitt 14 des inneren Schenkels 5.

Unterhalb der abkragenden Abschnitte 13,14 der Schenkel 4,5 ist ein Aufnahmeabschnitt 15 vorgesehen. In dem Aufnahmeabschnitt 15 sind der äußere Schenkel 4 und der innere Schenkel 5 weit genug voneinander beabstandet, um ein als Federlenker ausgebildetes Federaggregat 16 im zwischen den Schenkeln gebildeten Aufnahmeraum 17 aufzunehmen. Dazu ist ein Auge am äußeren Ende des Federlenkers über eine Verschraubung 18 im Aufnahmeraum 17 gehalten. In den unteren Abschnitten 19,20 des äußeren Schenkels 4 und des inneren Schenkels 5, die im dargestellten und insoweit bevorzugten Ausführungsbeispiel mit dem Aufnahmeabschnitt 15 des Federbocks 3 zusammenfallen, verlaufen der äußere Schenkel 4 und der innere Schenkel 5 im Wesentlichen in vertikaler Richtung parallel zueinander.

Zur Aussteifung des Aufnahmeabschnitts 15 ist sowohl der äußere Schenkel 4 also auch der innere Schenkel 5 an beiden längsseitigen Enden 21,22 gekröpft. Die gekröpften Abschnitte 23,24 des äußeren Schenkels 4 weisen dabei nach außen, während die gekröpften Abschnitte 25,26 des inneren Schenkels 5 nach innen weisen. Die gekröpften Abschnitte 23,24,25,26 greifen daher nicht in den Aufnahmeraum 17 des Federbocks (3) ein. An einem längseitigen Ende 21 sowohl des äußeren Schenkels 4 als auch des inneren Schenkels 5, und zwar beim dargestellten und insoweit bevorzugten Ausführungsbeispiel im Aufnahmeabschnitt 15, bilden die gekröpften Abschnitte 23,25 Anlageflächen 28,29. Zudem sind in den entsprechenden gekröpften Abschnitten 23,25 Bohrungen 30 vorgesehen, über die eine Querstrebe 31 am Federbock 3 verschraubt ist, die dabei in Anlage an den Anlageflächen 28,29 der genannten gekröpften Abschnitte 23,25 gelangt. Es käme alternativ auch eine andere Art der Verbindung zwischen der Querstrebe und wenigstens einem der beiden Schenkel in Frage, wobei dann bedarfsweise auch auf die Bohrungen in den gekröpften Abschnitten verzichtet werden könnte. Denkbar ist auch, dass die Querstrebe auf andere Art und Weise als über wenigstens einen gekröpften Abschnitt mit wenigstens einem der beiden Schenkel verbunden ist.

Nicht dargestellt ist, dass sich die Querstrebe bei dem dargestellten und insoweit bevorzugten Ausführungsbeispiel bis zu einem weiteren Federbock erstreckt, der an einem weiteren, der gegenüberliegenden Außenseite des Nutzfahrzeugs zugeordneten, Längsträger einer Rahmenkonstruktion des Fahrgestells auf die gleiche Weise befestigt ist. Dabei sind die beiden Federböcke zwei Federaggregaten derselben Achse des Nutzfahrzeugs zugeordnet.

Die gekröpften Abschnitte 23, 24, 25, 26 sowohl des äußeren Schenkels 4 als auch des inneren Schenkels 5 erstrecken sich bei dem dargestellten und insoweit bevorzugten Ausführungsbeispiel über die abkragenden Abschnitte 13,14 der entsprechenden Schenkel 4,5 hinweg bis in den Verbindungsbereich 9 des Federbocks 3 hinein. Beim äußeren Schenkel 4 verlaufen die gekröpften Abschnitte 23,24 bis in den Montageabschnitt 6 hinein, insbesondere bis zum oberen Ende des Montageabschnitts 6.

Bei dem dargestellten und insoweit bevorzugten Ausführungsbeispiel ist der äußere Schenkel 4 und der innere Schenkel 5 nur über einen Teil ihrer Längserstreckung im Verbindungsabschnitt 9 des Federbocks 3 miteinander verbunden. In einem anderen Teil des Verbindungsbereichs 9 weist wenigstens einer der Schenkel 5 einen ausgestellten Abschnitt 32 auf. Durch diesen wenigstens einen ausgestellten Abschnitt 32 wird zwischen den beiden Schenkeln 4,5 eine Aufnahme 33 zur Aufnahme eines weiteren Federaggregats gebildet. Es ist nicht zwingend erforderlich, dass die Aufnahme 33 im Verbindungsabschnitt 9 des Federbocks 3 vorgesehen ist. Die Aufnahme könnte auf Höhe eines abkragenden Abschnitts 13,14 wenigstens eines der beiden Schenkel 4,5 oder im Aufnahmeabschnitt 15 des Federbocks 3 vorgesehen sein.

Zwischen dem ausgestellten Abschnitt 32 und der Verbindung mit dem anderen Schenkel 4 ist bei dem dargestellten und insoweit bevorzugten Ausführungsbeispiel ein abgekragter Bereich 34 vorgesehen. Dadurch ist der innere Schenkel 5 im ausgestellten Abschnitt 32 weiter von dem äußeren Schenkel 5 beabstandet als im Bereich der Verbindung zwischen den beiden Schenkeln 4,5. Alternativ oder zusätzlich könnte auch der äußere Schenkel einen abgekragten Bereich zwischen der Verbindung mit dem inneren Schenkel und dem freien längsseitigen Ende des äußeren Schenkels aufweisen. Zudem ist die Aufnahme platzsparend auf etwa einer horizontalen Ebene mit der Verbindung zwischen den beiden Schenkeln vorgesehen.

## Patentansprüche

1. Fahrgestell (1) eines Nutzfahrzeugs, insbesondere eines Lastkraftwagens, eines Anhängers und/oder eines Aufliegers,
- mit wenigstens einem Längsträger (2) und wenigstens einem Federbock (3),
- wobei der Federbock (3) einen seitlich am Längsträger (2) befestigten Montageabschnitt (6) sowie einen unterhalb des Montageabschnitts (6) angeordneten Aufnahmeabschnitt (15) zur Aufnahme wenigstens eines Federaggregats (16) aufweist und
- wobei der Aufnahmeabschnitt (15) einen separaten äußeren Schenkel (4) und einen separaten inneren Schenkel (5) umfasst, die zwischen einander im Aufnahmeabschnitt (15) einen Aufnahmeraum (17) zur Aufnahme des Federaggregats (16) ausbilden, und unterhalb des Längsträgers (2) miteinander verbunden sind,
**dadurch gekennzeichnet, dass**
- der äußere Schenkel (4) und der innere Schenkel (5) als Schalenbauteil ausgebildet sind.

2. Fahrgestell nach Anspruch 1,
**dadurch gekennzeichnet, dass** der äußere Schenkel (4) und/oder der innere Schenkel (5) als gepresstes Blechformteil ausgebildet sind.

3. Fahrgestell nach Anspruch 1 oder 2,
**dadurch gekennzeichnet, dass** der äußere Schenkel (4) und der innere Schenkel (5) oberhalb des Aufnahmeraums (17) zur Aufnahme des Federaggregats (16) miteinander verbunden sind.

4. Fahrgestell nach einem der Ansprüche 1 bis 3,
**dadurch gekennzeichnet, dass** der äußere Schenkel (4) und der innere Schenkel (5) durch eine Schraubverbindung, eine Bolzverbindung und/oder eine Nietverbindung miteinander verbunden sind.

5. Fahrgestell nach einem der Ansprüche 1 bis 4,
**dadurch gekennzeichnet, dass** der äußere Schenkel (4) einen nach außen abkragenden Abschnitt (13) aufweist und/oder der innere Schenkel (5) einen nach innen abkragenden Abschnitt (14) aufweist.

6. Fahrgestell nach Anspruch 5,
**dadurch gekennzeichnet, dass** der Aufnahmeraum (17) zur Aufnahme des Federaggregats (16) unterhalb des wenigstens einen nach innen und/oder nach außen abkragenden Abschnitts (13,14) vorgesehen ist.

7. Fahrgestell nach einem der Ansprüche 1 bis 6,
**dadurch gekennzeichnet, dass** zwischen dem inneren und dem äußeren Schenkel (4,5) wenigstens ein Distanzelement (12,12') vorgesehen ist.

8. Fahrgestell nach Anspruch 7,
**dadurch gekennzeichnet, dass** das Distanzelement (12,12') als Scheibe und/oder Platte ausgebildet ist.

9. Fahrgestell nach einem der Ansprüche 1 bis 8,
**dadurch gekennzeichnet, dass** der Montageabschnitt (6) vom äußeren Schenkel (4) gebildet wird.

10. Fahrgestell nach einem der Ansprüche 1 bis 9,
**dadurch gekennzeichnet, dass** der äußere Schenkel (4) und/oder der innere Schenkel (5) jeweils wenigstens einen gekröpften Abschnitt (23,24,25,26) aufweist.

11. Fahrgestell nach einem der Ansprüche 1 bis 10,
**dadurch gekennzeichnet, dass** eine Querstrebe (31) an dem äußeren Schenkel (4) und/oder dem inneren Schenkel (5)montiert ist.

12. Fahrgestell nach einem der Ansprüche 11,
**dadurch gekennzeichnet, dass** die Querstrebe (31) an dem wenigstens einen gekröpften Abschnitt (23,24,25,26) des äußeren Schenkels (4) und/oder des inneren Schenkels (5) montiert ist.

13. Fahrgestell nach einem der Ansprüche 1 bis 12,
**dadurch gekennzeichnet, dass** im Aufnahmeraum (17) ein Federlenker aufgenommen ist.

14. Fahrgestell nach einem der Ansprüche 1 bis 13,
**dadurch gekennzeichnet, dass** zwischen dem äußeren Schenkel (4) und dem inneren Schenkel (5) eine Aufnahme (33) zum Aufnehmen eines weiteren Federaggregats vorgesehen ist.

15. Fahrgestell nach Anspruch 14,
**dadurch gekennzeichnet, dass** in der Aufnahme (33) ein Stoßdämpfer aufgenommen ist.

16. Fahrgestell nach einem der Ansprüche 1 bis 16,
**dadurch gekennzeichnet, dass** der Montageabschnitt (6) des Federbocks (3) mehrere parallel zueinander verlaufende Reihen von Bohrungen (8,8') zum Befestigen des Federbocks (3) am Längsträger (2) aufweist.

## Claims

1. Chassis (1) of a commercial vehicle, in particular of a lorry, a trailer and/or a semi-trailer,
- having at least one longitudinal support (2) and at least one spring bracket (3),
- wherein the spring bracket (3) has a mounting section (6) attached laterally to the longitudinal support (2) and a receiving section (15) arranged below the mounting section (6) to receive at least one spring unit (16) and
- wherein the receiving section (15) has a separate exterior leg (4) and a separate interior leg (5), which form a receiving space (17) between each other in the receiving section (15) to receive the spring unit (16), and are connected to each other below the longitudinal support (2),
**characterised in that**
- the exterior leg (4) and the interior leg (5) are designed as shell component.

2. Chassis according to Claim 1, **characterised in that** the exterior leg (4) and/or the interior leg (5) are designed as pressed sheet metal component.

3. Chassis according to Claim 1 or 2, **characterised in that** the exterior leg (4) and the interior leg (5) are connected to each other above the receiving space (17) to receive the spring unit (16).

4. Chassis according to any one of Claims 1 to 3, **characterised in that** the exterior leg (4) and the interior leg (5) are connected to each other by a screw connection, a bolt connection and/or a rivet connection.

5. Chassis according to any one of Claims 1 to 4, **characterised in that** the exterior leg (4) has a section (13) protruding outwards and/or the interior leg (5) has a section (14) protruding inwards.

6. Chassis according to Claim 5, **characterised in that** the receiving space (17) is provided to receive the spring unit (16) below the at least one section (13, 14) protruding inwards and/or outwards.

7. Chassis according to any one of Claims 1 to 6, **characterised in that** at least one spacer element (12, 12') is provided between the interior and the exterior leg (4, 5).

8. Chassis according to Claim 7, **characterised in that** the spacer element (12, 12') is designed as a disk and/or a plate.

9. Chassis according to any one of Claims 1 to 8, **characterised in that** the mounting section (6) is formed by the exterior leg (4).

10. Chassis according to any one of Claims 1 to 9, **characterised in that** the exterior leg (4) and/or the interior leg (5) have/has at least one bent section (23, 24, 25, 26) respectively.

11. Chassis according to any one of Claims 1 to 10, **characterised in that** a cross member (31) is mounted on the exterior leg (4) and/or on the interior leg (5).

12. Chassis according to any one of Claims 11 [*sic*], **characterised in that** the cross member (31) is mounted on the at least one bent section (23, 24, 25, 26) of the exterior leg (4) and/or of the interior leg (5).

13. Chassis according to any one of Claims 1 to 12, **characterised in that** a spring link is accommodated in the receiving space (17).

14. Chassis according to any one of Claims 1 to 13, **characterised in that** a receiver (33) is provided between the exterior leg (4) and the interior leg (5) for accommodating a further spring unit.

15. Chassis according to Claim 14, **characterised in that** a shock absorber is accommodated in the receiver (33).

16. Chassis according to any one of Claims 1 to 16, **characterised in that** the mounting section (6) of the spring bracket (3) has a plurality of rows of holes (8, 8') running parallel to each other for attaching the spring bracket (3) to the longitudinal support (2).

## Revendications

1. Châssis (1) de véhicule utilitaire, en particulier d'un camion, d'une remorque et / ou d'une semi-remorque,
- avec au moins un support longitudinal (2) et au moins un support de ressort (3),
- sachant que le support de ressort (3) est doté d'une section de montage (6), fixée latéralement sur le support longitudinal (2), ainsi que d'une section de réception (15), qui, disposée au-dessous de la section de montage (6), est destinée à recevoir un système de ressort (16), et
- sachant que la section de réception (15) comprend une branche extérieure (4) séparée et une branche intérieure (5) séparée, qui forment entre elles, dans la section de réception (15), un logement (17) destiné à recevoir le système de ressort (16), et sont reliées ensemble au-dessous du support longitudinal (2),
**caractérisé en ce que** la branche extérieure (4) et la branche intérieure (5) sont réalisées en tant que composant en forme de coquille.

2. Châssis selon la revendication 1, **caractérisé en ce que** la branche extérieure (4) et / ou la branche intérieure (5) sont réalisées en tant que pièce de formage en tôle pressée.

3. Châssis selon revendication 1 ou 2, **caractérisé en ce que** la branche extérieure (4) et la branche intérieure (5) sont reliées ensemble au-dessus du logement (17), pour la réception du système de ressort (16).

4. Châssis selon l'une des revendications 1 à 3, **caractérisé en ce que** la branche extérieure (4) et la branche intérieure (5) sont reliées ensemble par vissage, par boulonnage et / ou par rivetage.

5. Châssis selon l'une des revendications 1 à 4, **caractérisé en ce que** la branche extérieure (4) est dotée d'une section en saillie vers l'extérieur (13) et / ou la branche intérieure (5) est dotée d'une section en saillie vers l'intérieur (14).

6. Châssis selon la revendication 5, **caractérisé en ce que** le logement (17), destiné à la réception du système de ressort (16), est situé au-dessous de la section en saillie vers l'intérieur et / ou vers l'extérieur (13, 14) au moins prévue.

7. Châssis selon l'une des revendications 1 à 6, **caractérisé en ce qu'**au moins un élément d'écartement (12, 12') est prévu entre la branche intérieure et la branche extérieure (4, 5).

8. Châssis selon la revendication 7, **caractérisé en ce que** l'élément d'écartement (12, 12') est réalisé sous la forme d'un disque et / ou d'une plaque.

9. Châssis selon l'une des revendications 1 à 8, **caractérisé en ce que** la section de montage (6) est formée par la branche extérieure (4).

10. Châssis selon l'une des revendications 1 à 9, **caractérisé en ce que** la branche extérieure (4) et / ou la branche intérieure (5) est / sont dotée/s chacune d'une section coudée (23, 24, 25, 26).

11. Châssis selon l'une des revendications 1 à 10, **caractérisé en ce qu'**une traverse (31) est montée sur la branche extérieure (4) et / ou sur la branche intérieure (5).

12. Châssis selon la revendication 11, **caractérisé en ce que** la traverse (31) est montée sur la section coudée (23, 24, 25, 26), au moins prévue, de la branche extérieure (4) et / ou de la branche intérieure (5).

13. Châssis selon l'une des revendications 1 à 12, **caractérisé en ce que**, dans le logement (17), est logé un bras de suspension.

14. Châssis l'une des revendications 1 à 13, **caractérisé en ce que**, entre le branche extérieure (4) et la branche intérieure (5), est prévu un logement (33), destiné à recevoir un autre système de ressort.

15. Châssis selon la revendication 14, **caractérisé en ce que**, dans le logement (33) est logé un amortisseur de chocs.

16. Châssis selon l'une des revendications 1 à 15, **caractérisé en ce que** la section de montage (6) du support de ressort (3) est dotée de plusieurs rangées d'alésages (8, 8'), qui s'étendent parallèlement les unes aux autres, pour la fixation du support de ressort (3) sur le support longitudinal (2).
